# FASCICULE DE BREVET EUROPEEN

(11) **EP 1 212 553 B1**
(45) Date de publication et mention de la délivrance du brevet: **19.03.2003**
(21) Numéro de dépôt: 00960791.2
(22) Date de dépôt: 04.09.2000
(51) Int. Cl.: F16H 57/02, B63H 23/02, B63H 20/14, B63H 5/125

(54) **CARTER DE DISPOSITIF DE RENVOI D'ANGLE DE MOTEUR DE PROPULSION POUR BATEAU**
GEHÄUSE EINES WINKELGETRIEBES FÜR EINEN BOOTSANTRIEB
HOUSING FOR ANGLE GEAR BOX FOR A BOAT PROPULSION MOTOR

(30) Priorité: 07.09.1999 FR 9911315
(43) Date de publication de la demande: 12.06.2002
(73) Titulaire: Max Power, 06210 Mandelieu la Napoule (FR)
(72) Inventeur: FONTANILLE, Guy, F-83600 Les Adrets de l'Esterel (FR)
(74) Mandataire: Domange, Maxime
(86) Numéro de dépôt international: FR0002437
(87) Numéro de publication internationale: WO01018431

(56) Documents cités:
- EP-A- 0 177 001
- EP-A- 0 394 029
- FR-A- 2 517 018
- US-A- 2 039 535
- US-A- 2 089 366
- US-A- 2 545 502
- US-A- 3 939 795
- US-A- 3 946 698
- US-A- 5 505 101
- US-A- 5 642 991
- US-A- 5 908 072

## Description

La présente invention concerne un carter de dispositif de renvoi d'angle de moteurs de propulsion d'engins flottants ou submersibles, en particulier les propulseurs équipant les étraves et poupes de bateaux ou de navires.

Plus précisément la présente invention concerne un carter ou boîte destiné(e)s à protéger un dispositif de renvoi d'angle du type comprenant :
- deux arbres tournants par rapport respectivement à deux axes de rotation perpendiculaires dont un premier arbre est entraîné en rotation par un moteur et un deuxième arbre entraîne au moins une hélice en rotation,
- ainsi que des éléments mécaniques tels que engrenages comprenant des roues dentées et roulements à billes permettant la transmission de la rotation du dit premier arbre au dit deuxième arbre.

Ce type de dispositif est utilisé notamment dans des propulseurs rétractables ou escamotables permettant de les utiliser sur des unités flottantes, en particulier dans la plaisance ou le dit propulseur doit être installé très en avant dans l'étrave du bateau. On a décrit dans le brevet WO 97/20733 comprenant les caractéristiques du préambule de la revendication 1, des propulseurs de ce type notamment des propulseurs latéraux ou longitulinaux dans lesquels le propulseur est associé à un bras de guidage qui comporte dans sa partie supérieure un moteur, le bras de guidage renfermant un arbre tournant relié au moteur et entraînant à son autre extrémité un dispositif de renvoi d'angle à engrenage assurant la rotation de l'arbre d'entraînant sur lequel est monté une hélice.

Dans les réalisations antérieures de carter de dispositif de renvoi d'angle dans le domaine maritime ou dans les autres domaines de l'industrie, ceux-ci sont toujours réalisés en matériau métallique avec une pièce principale de protection du dispositif de renvoi constitué en une pièce coulée creuse à l'intérieur de laquelle sont insérés en aveugle les dits arbres et les dits éléments mécaniques assurant le renvoi d'angle de façon à assurer une protection présentant une résistance mécanique suffisante pour reprendre les efforts importants de contrainte mécanique induits par la poussée de l'arbre portant les dites hélices de propulsion et auquel est soumis le carter lorsque le dispositif de renvoi d'angle est en action. Dans le cas de dispositif immergé, les fabricants utilisent en général des matériaux lourds et onéreux tel que le bronze pour un impératif supplémentaire de résistance à la corrosion.

En outre cette pièce métallique coulée creuse de protection nécessite un usinage de précision long et difficile à réaliser.

Enfin de par sa structure en une seule pièce unique creuse en métal coulé, le montage des différents éléments mécaniques du dispositif de renvoi d'angle dans le carter est long et difficile car il se fait en aveugle. L'ajustement du dispositif complet, notamment pour assurer la parfaite perpendicularité des axes des arbres tournants dans la dite pièce, est difficile, et ne peut pas être contrôlé lors du montage du dispositif de renvoi d'angle à l'intérieur du carter. De surcroît, il est nécessaire d'effectuer le montage complet du renvoi d'angle dans le carter ainsi que le montage du carter avec les différents autres éléments mécaniques assemblés en sortie du carter dans l'axe des deux arbres pour vérifier si l'ajustage du dispositif de renvoi dans le carter est correct et vérifier son calage en fonction des tolérances d'ajustement des différents autres éléments en sortie de carter dans l'axe des deux arbres.

Ces difficultés de calage et d'ajustement se posent avec d'autant plus d'acuité que la dite pièce métallique creuse coulée est difficile à reproduire de manière uniforme en production compte tenu de l'importance de l'usinage de précision qu'implique sa fabrication.

En outre, le carter est constitué par l'assemblage avec trois autres pièces métalliques rapportées qui doivent, elles aussi, être usinées précisément. Ces pièces rapportées assurent la fermeture des orifices de la dite pièce principale creuse par lesquels les différents éléments mécaniques du dispositif de renvoi d'angle sont insérés dans la dite pièce principale creuse. Les pièces rapportées de fermeture des orifices d'insertion du dispositif de renvoi d'angle dans le dit carter sont fixées sur la dite pièce principale creuse coulée métallique selon un plan de jonction perpendiculaire aux axes tournants et, notamment, perpendiculaire à l'axe de propulsion portant l'hélice. Il en résulte que les efforts de poussée de l'arbre portant l'hélice doivent être repris par les moyens de fixation de la pièce rapportée sur la dite pièce principale creuse à l'orifice de sortie de l'axe de propulsion portant l'hélice.

Au total, il résulte de la structure des carters des réalisations antérieures que l'usinage et le montage des dits carters et des pièces constitutives sont très longs et très coûteux.

Ainsi, dans les propulseurs latéraux ou longitudinaux du type de ceux décrits dans WO 97/20733 le coût du carter et du montage des éléments mécanique du dispositif de renvoi d'angle qu'il renferme représente environ les deux tiers du coût du propulseur.

On connaît dans US 3,946,698 et FR 2 517 018 des carters d'engrenage d'angle réalisés à partir de deux demi-coquilles en alliage métallique. Dans FR 2 517 018, le carter n'est pas destiné à être immergé en milieu marin pour la propulsion d'un moteur à hélice d'engin flottant ou submersible. Dans US 3,946,698, le carter est constitué de deux parties superposées et renferme deux dispositifs de renvoi d'angle de sorte que l'arbre tournant relié au moteur est parallèle à l'arbre tournant relié à l'hélice. Le document US-A-3 946 698, en outre, montre un carter de dispositif de renvoi d'angle de moteur de propulsion pour bateau destiné à être immergé et contenir un dispositif de renvoi d'angle comprenant:
- deux arbres tournants par rapport à deux axes perpendiculaires dont un premier arbre est entraîné en rotation par le dit moteur et un deuxième arbre entraîne au moins une hélice en rotation,
- ainsi que les éléments mécaniques comprenant des engrenages et roulements à billes permettent la transmission de rotation du dit premier arbre au dit deuxième arbre, **ledit carter**
- comprend deux demi-coquilles complémentaires assemblées et coopérant entre elles selon un plan de jonction défini par les dit axes de rotation desdit arbres tournants et présentant chacune:
   -- une zone creuse réceptacle du dit dispositif du renvoi d'angle dans ledit plan de jonction'et
   -- une surface d'appui plane extérieure à la dite zone creuse et servant d'appui sur la demi-coquille complémentaire.

Le problème posé par la présente invention est donc de réaliser un carter de dispositif de renvoi d'angle à engrenages et roulements à billes pour moteur de propulsion d'engins flottants ou submersibles, ledit dispositif de renvoi d'angle comprenant l'arbre tournant relié au moteur et un arbre perpendiculaire relié à l'hélice et ledit carter présentant une résistance mécanique suffisante compte tenu des efforts de contrainte mécanique de poussée transmis par le dit dispositif et repris par le carter tout en palliant les inconvénients de montage et de coût des carters métalliques antérieurs réalisés en pièces métalliques usinées tel que mentionné précédemment.

Un autre problème est de fournir un carter pour un usage en milieu marin présentant des caractéristiques de stabilité mécanique et d'étanchéité, mais aussi d'hydraulicité, notamment avec un volume et un encombrement réduits, adaptées pour des conditions d'utilisation en immersion à au moins 1 mètre de profondeur, de préférence au moins 3 mètres de profondeur, l'étanchéité devant plus particulièrement assurer une protection contre les effets prolongés d'une immersion sous pression.

Les recherches de l'inventeur dans le choix de la structure des pièces pouvant constituées le corps de protection principale du carter ont permis d'obtenir une solution aux problèmes posés avec un carter dont le corps principal réceptacle du dispositif de renvoi d'angle est réalisé en plusieurs pièces en un matériau synthétique renforcé et coopérant selon un plan de jonction approprié.

Plus précisément la présente invention fournit un carter de dispositif de renvoi d'angle de moteurs de propulsions pour bateaux destinés être immergé et à contenir un dispositif de renvoi d'angles comprenant :
- deux arbres tournants par rapport à deux axes perpendiculaires dont un premier arbre est entraîné en rotation par le dit moteur et un deuxième arbre entraîne au moins une hélice en rotation
- ainsi que les éléments mécaniques comprenant des engrenages et roulements à billes permettant la transmission de rotation du dit premier arbre au dit deuxième arbre, caractérisé en ce que il comprend deux demi-coquilles complémentaires assemblées, réalisées en matériau synthétique polymère thermoplastique renforcé, coopérant entre elles selon un plan de jonction défini par lesdits axes de rotation desdits arbres tournants et présentant chacune dans ledit plan de jonction :

- une zone creuse réceptacle du dit dispositif du renvoi d'angle, et
- une surface d'appui plane extérieure à la dite zone creuse et servant d'appui sur la coquille complémentaire.

De préférence, les deux demi-coquilles comprennent à leurs extrémités des demi-manchons de sorte qu'une fois les demi-coquilles assemblées, elles définissent un carter présentant :
- un manchon tubulaire supérieur à travers lequel débouche ledit premier arbre, et
- au moins un manchon tubulaire latéral comprenant au moins un évidement annulaire intérieur destiné à recevoir desdits roulements, manchon latéral à travers lequel débouche undit deuxième arbre,
- et des moyens d'assemblage stable et étanche des deux demi-coquilles comprennent des colliers de forme tubulaire ajustés autour desdits manchons tubulaires, lesdits colliers étant de préférence réalisés en acier inoxydable.

Cesdits colliers assurent une liaison mécanique stable et étanche entre les deux demi-coquilles très avantageuse, car ils recouvrent les zones du carter qui renferment des roulements et/ou qui coopèrent avec l'hélice ou une ouverture dans un élément support assurant un interface de liaison du carter avec le moteur, et sont donc soumises à des efforts mécaniques importants risquant de générer des ruptures mécaniques et/ou défauts d'étanchéité. Cesdits colliers évitent en particulier d'avoir recours sur la surface desdits manchons à des bossages au travers desquels sont ménagés des trous pour permettre une fixation des deux demi-coquilles par des organes filetés. Lesdits bossages seraient désavantageux sur le plan de l'hydraulicité et d'hydrodynamisme du profil extérieur du carter et auraient tendance à augmenter le volume du carter, ce que l'on recherche à éviter en milieu immergé.

En outre, comme au moins un des manchons latéraux vient se loger dans le moyeu d'une hélice, lesdits bossages impliqueraient de créer un évidement trop important dans le moyeu de l'hélice, ce qui réduirait la résistance mécanique de l'hélice. De même, comme le manchon supérieur passe à travers une ouverture dans undit élément support assurant l'interface de liaison avec le moteur, un bossage sur ledit manchon supérieur nécessiterait de créer une ouverture dans ledit élément support plus importante, ce qui serait source de fragilité mécanique dans la liaison manchon supérieur - dit élément support. La forme tubulaire des manchons et colliers permet de les loger avantageusement dans desdits orifices cylindriques à travers ledit élément support et respectivement le moyeu d'une dite hélice, ce qui assure une meilleure liaison entre le carter et ledit élément support et ladite hélice, que ce soit au plan mécanique ou au plan de l'étanchéité.

La combinaison d'une part de la forme des deux demi-coquilles lesquelles peuvent être sensiblement symétriques par le fait qu'elles s'assemblent selon un plan de jonction comprenant les axes des deux arbres tournants, et peuvent méme être strictement identiques, et d'autre part de la matière utilisée, contribue à permettre une production en série d'un produit performant techniquement et d'une mise en oeuvre au montage aisée dans des conditions économiques très avantageuses.

De par la structure du dit carter, en particulier de par le fait que la jonction des deux demi-coquilles et la fermeture du carter s'opèrent selon un plan contenant les deux axes de rotation des deux arbres, on peut d'une part installer le dispositif de renvoi complet dans la dite zone creuse d'une seule des dites demi-coquilles. Il est ainsi possible d'assurer le contrôle d'ajustement des différents éléments mécanique du dispositif de renvoi d'angle avant assemblage des deux coquilles et fermeture du carter. D'autre part les efforts de poussée selon la direction longitudinale des dits axes de rotation des dits arbres sont répartis et transmis de manière identique sur les deux coquilles et ne sont pas repris exclusivement par les moyens de fixation des deux coquilles entre elles mais sont repris essentiellement dans la masse des deux coquilles.

Plus particulièrement, le choix d'un matériau synthétique polymère thermoplastique renforcé, celui-ci étant à la fois injectable de par ses propriétés thermoplastiques et présentant des propriétés de résistance mécanique élevées de par sa nature composite avec la présence de renforts tel que des charges minérales ou synthétiques, permet d'obtenir par moulage avec une grande précision et sans usinage des coquilles de haute performance mécanique et d'uniformité parfaite en production.

Dans un mode préférentiel de réalisation, le carter selon l'invention est constitué de deux demi-coquilles identiques

La structure identique des deux demi-coquilles est un avantage supplémentaire car cela permet de rationaliser les stocks et contribue à la réduction des coûts dans la mesure où il n'y a plus qu'une seule pièce à injecter. De surcroît, il n'y a pas de coquilles mâles ou de coquilles femelles donc les doutes et les erreurs sont inexistants.

Avantageusement, la dite surface d'appui de chaque coquille comporte des ouvertures de fixation qui permettent l'assemblage mécanique des deux demi-coquilles par des organes filetés tels que des vis, dans une zone de fixation située en dehors des zones d'extrémité de ladite surface d'appui formant lesdits manchons supérieur et latéral.

De même avantageusement encore, lesdites demi-coquilles comprennent dans ladite zone de fixation de ladite surface d'appui située dessous ledit manchon supérieur, de part et d'autre de la zone creuse recevant ledit premier arbre, des empreintes en creux permettant l'insertion d'écrous de fixation dudit carter sur ledit élément support assurant une interface de liaison du carter avec le moteur.

L'étanchéité entre les deux demi-coquilles peut être assurée en répandant une colle ou pâte à joint sur lesdites surfaces d'appui ou à l'aide d'un joint torique inséré dans une rainure à joints.

Dans un mode de réalisation avantageux, chaque demi-coquille comporte une rainure à joints située sur la dite surface d'appui entre la zone creuse réceptacle et une zone comprenant les moyens de fixation des coquilles entre elles, la dite rainure à joints couvrant plus de la moitié de la périphérie de la dite zone creuse réceptacle de sorte que les dits joints des deux coquilles se chevauchent en un point d'intersection quand les deux coquilles sont fixées l'une à l'autre. Ce chevauchement de joint garantit l'étanchéité complète du pourtour de la zone creuse réceptacle à protéger.

Préférentiellement, chaque demi-coquille présente un axe de symétrie qui correspond à l'axe de l'un des dits arbres tournants lorsque ceux ci sont logés à l'intérieur de la zone creuse réceptacle, et la dite rainure à joints suit la périphérie d'une des moitiés symétriques de la dite coquille en dépassant l'axe de symétrie de manière à déboucher à au moins une de ses extrémités dans une partie creuse ou à l'extérieur de la dite demi-coquille. Cette configuration permet le fluage du joint lorsque celui-ci est compressé par jonction et fixation des deux demi-coquilles entre elles.

Dans une autre variante de réalisation, le carter est réalisé avec deux demi-coquilles distinctes dont notamment une coquille avec une rainure à joints sur la totalité de sa périphérie et une demi-coquille sans rainure à joints.

De manière à obtenir des propriétés mécaniques élevées, les coquilles sont réalisées dans un matériau polymère composite renforcé par des charges minérales ou synthétiques en particulier sous forme de fibres. Dans un mode de réalisation préféré le matériau polymère thermoplastique comprend une résistance à la traction supérieure à deux cents MPa, de préférence supérieure à 250 MPa et une haute rigidité avec un module d'élasticité supérieur à 10 GPa de préférence supérieur à 15 GPa et une teneur d'absorption d'eau inférieur à 0,5 %, de préférence inférieur à 0,15 %.

En particulier, on utilise un matériau composite thermoplastique haute performance à base de polyphtalamides (PPA) renforcé par des fibres de verre, de préférence environ 45 % en poids.

Les avantages de la présente invention sont donc :
- les caractéristiques d'étanchéité, d'hydraulicité du profil et de résistance mécanique du carter, de par une reprise d'efforts de contrainte réduite au niveau de la fixation des deux coquilles, et des moyens d'assemblage des deux demi-coquilles comprenant des colliers, et enfin l'utilisation d'un matériau polymère thermoplastique renforcé,
- les conditions économiques avantageuses de production en moulage par injection, de par l'absence d'usinage des pièces et la parfaite uniformité des demi-coquilles, la facilité d'installation du dispositif de renvoi d'angle dans le carter, celle-ci se faisant "à ciel ouvert", ainsi que la possibilité de contrôle visuel de l'ajustement du dit dispositif dans le carter et le calage par rapport aux autres éléments mécaniques avec lesquels il coopère à l'extérieur du carter en particulier l'ajustement des différentes roues dentées et roulements et de la perpendicularité des arbres dans la zone creuse réceptacle.
   Il en résulte une réduction des coûts de fabrication considérable qui peut représenter jusqu'à 30 % par rapport au coût total de fabrication d'un propulseur
- une réduction du poids du carter d'un facteur de 4 à 5 et partant une réduction du propulseur de l'ordre de 20 %
- l'absence de couple galvanique en milieu marin qui est un des inconvénients de l'utilisation de pièces métalliques
- et enfin une meilleure résistance à la corrosion que les pièces métalliques.

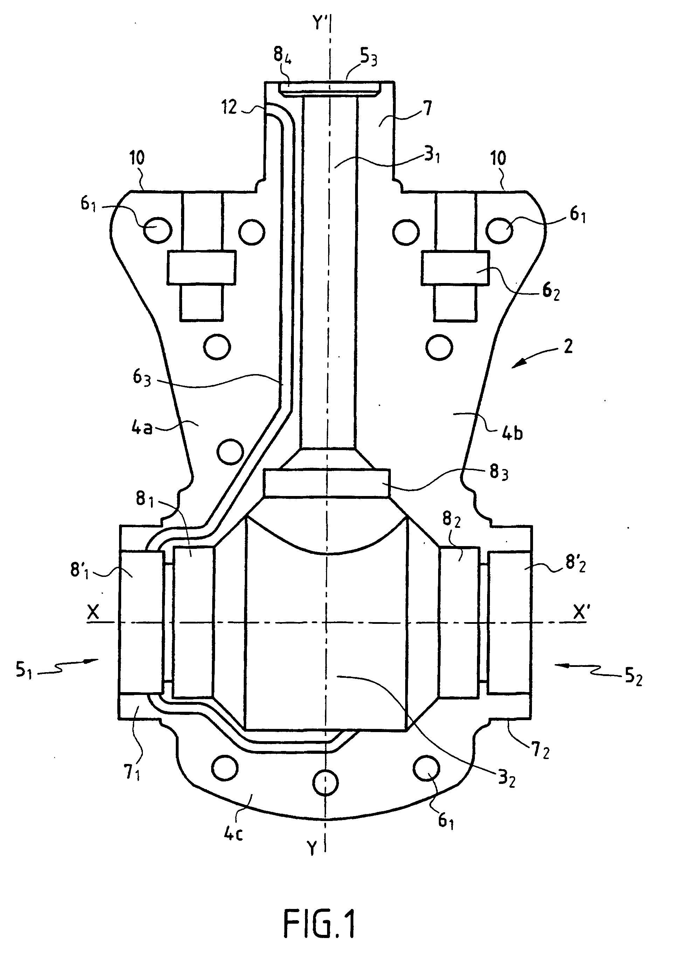

D'autres avantages et caractéristiques apparaîtront à la lecture de la description détaillée qui va suivre faite en référence aux figures 1.et 2.

La figure 1 représente une vue de la face intérieure d'une demi-coquille 2 selon l'invention.

La figure 2 représente une coupe en vue de profil d'un carter 1 selon l'invention comprenant deux demi-coquilles 2 assemblées de sorte que les deux faces intérieures définies sur les plans XX' et YY' de chaque demi-coquille sont en appui.

La figure 3 représente un carter selon l'invention vu en perspective.

La figure 4 représente un carter selon l'invention vu en perspective avec des colliers d'assemblage représentés en position dégagée par rapport au manchon, dans lequel ils sont destinés à être ajustés.

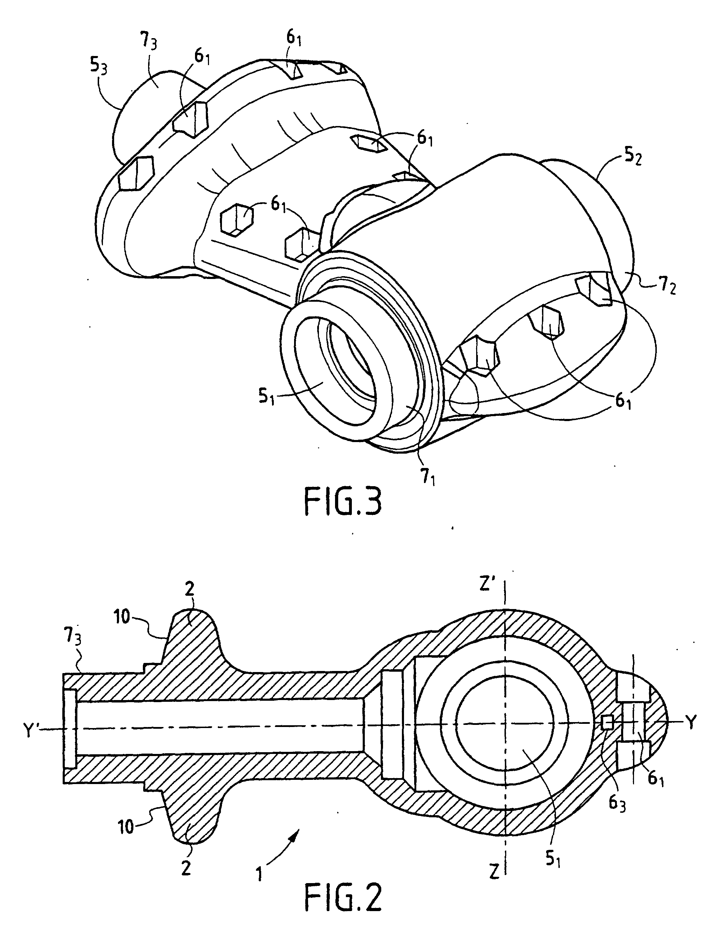

Un carter 1 selon l'invention représenté et sur la figure 2 est obtenu par assemblage de deux demi-coquilles 2 identiques représentées sur la figure 1.

Sur la figure 1, la face intérieure de chaque demi-coquille présente une zone creuse réceptacle 3 du dispositif de renvoi d'angle et une surface d'appui 4a, 4b, 4c plane qui vient en appui avec la même surface de la deuxième coquille lorsque les deux faces intérieures des deux demi-coquilles sont mises en contact pour l'assemblage des deux demi-coquilles et la fermeture du carter. Les deux dites surfaces d'appui des demi-coquilles coopèrent donc entre elles selon ledit plan de jonction des deux coquilles défini par les dit axes de rotation des dit arbres tournants.

Les deux demi-coquilles 2 comprennent à leurs extrémités des demi-manchons de forme semi-tubulaire 7₃, 7₂, 7₁ de sorte qu'une fois les demi-coquilles assemblées, elles définissent :
- un manchon supérieur 7₃ de forme tubulaire dont l'extrémité supérieure définit l'orifice supérieur 5₃ dudit carter à travers lequel débouche ledit premier arbre, et
- deux manchons tubulaires latéraux 7₁, 7₂ comprenant des évidements annulaires intérieurs 8₁, 8₂ destinés à recevoir desdits roulements. L'extrémité d'au moins un manchon latéral définit un orifice latéral 5₁, 5₂ dudit carter à travers lequel débouche au moins undit deuxième arbre.

Dans un mode de réalisation , le propulseur comprend une seule hélice et un orifice latéral 5₂ dudit carter est bouché.

Dans un autre mode de réalisation, le propulseur comprend deux hélices, et chaque orifice latéral 5₁, 5₂ dudit carter est traversé par undit deuxième arbre.

Des moyens d'assemblage stable et étanche des deux demi-coquilles comprennent des colliers en acier inoxydable 9₁, 9₂, 9₃ de forme tubulaire lesquels sont ajustés en force autour desdits manchons tubulaires 7₁, 7₂, 7₃.

Ledit manchon tubulaire supérieur 7₃ fait saillie par rapport à une surface d'appui supérieure 10 du carter destinée à coopérer avec une surface d'un élément support (non représenté) assurant une interface de liaison du carter avec le moteur. Ledit élément support comprend une ouverture cylindrique à travers laquelle passe ledit manchon supérieur 7₃ revêtu dudit collier supérieur 9₃. Ledit élément support peut être placé à l'intérieur ou à l'extérieur de la coque du bateau selon les applications. Dans le cas de moteurs à propulsion d'étrave, l'élément support est avantageusement placé à l'intérieur de la coque, la coque se trouve donc intercalée entre la surface d'appui supérieure 10 du carter et ledit élément support.

Au moins un des manchons latéraux 7₁, 7₂ revêtus des colliers tubulaires latéraux 9₁ et 9₂ peut coopérer avec un orifice cylindrique dans le moyeu d'une hélice.

La zone creuse réceptacle 3 de chaque coquille est creusée de manière à protéger la moitié du dispositif de renvoi d'angle. En particulier, la partie en forme de section semi-circulaire 3₁ correspond à une enveloppe de demi-cylindre.

Sur la figure 1, la zone creuse réceptacle 3 du dispositif de renvoi d'angle comprend plusieurs parties :
- une partie supérieure 3₁ en forme semi-cylindrique verticale c'est à dire de section semi-circulaire qui reçoit le premier arbre tournant relié au moteur par son extrémité supérieure, laquelle débouche dans l'orifice supérieur 5₃ du carter
- une partie inférieure 3₂ qui reçoit
   - l'extrémité inférieure dudit premier arbre,
   - les engrenages à roues dentées et roulements à billes, ainsi que
   - l'extrémité dudit deuxième arbre tournant qui est entraîné en rotation par lesdits engrenages et roulements à bille et dont l'autre extrémité débouche dans un orifice latéral 5₁, 5₂ du carter.

Ladite partie inférieure 3₂ de ladite zone creuse comprend :
- un évidement annulaire 8₃ dans sa partie supérieure, destiné à recevoir un roulement dudit premier arbre et,
- des évidements annulaires 8₁, 8₂ destinés à recevoir des roulements dudit deuxième arbre et des évidements annulaires 8'₁ et 8'₂ destinés à recevoir des joints d'étanchéité annulaires à ses extrémités latérales.

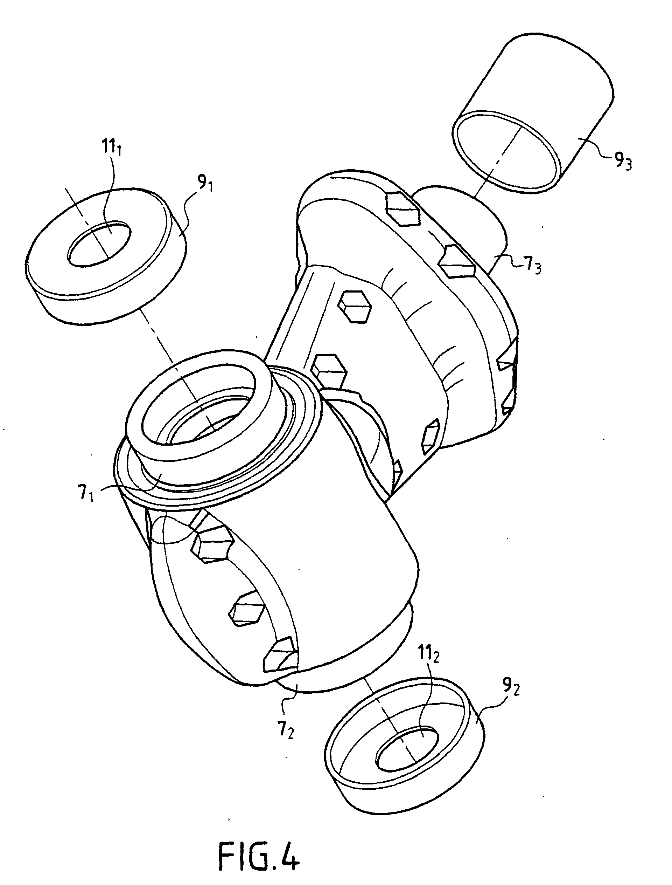

En effet, sur la figure 4, pour améliorer l'étanchéité,
. les manchons latéraux 7₁, 7₂ comprennent des évidements annulaires 8'₁, 8'₂ destinés à recevoir des joints d'étanchéité à double lèvres, en forme de rondelle placées autour dudit deuxième arbre vers l'extérieur du carter par rapport aux évidements 8₁, 8₂ destinés aux roulements ; et
. les colliers latéraux 9₁ et 9₂ de forme tubulaire comprennent à leur extrémité un fond avec une ouverture centrale circulaire 11₁, 11₂, dont le diamètre correspond sensiblement au diamètre dudit deuxième arbre tournant, de sorte que lesdits joints insérés dans les évidements annulaires 8'₁, 8'₂ sont protégés par la zone pleine dudit fond, lesdits colliers latéraux 9₁, 9₂ constituent ainsi des capsules de protection vis à vis desdits joints.

On entend ici par « joints à double lèvres » que la rondelle présente des lèvres circulaires sur chacune de ses faces externes et internes. Le joint assure ainsi l'étanchéité vis à vis de la pression externe et de la pression interne, d'une part entre le joint et l'arbre tournant, et d'autre part entre le joint et la surface intérieure du carter. La capsule assure donc la protection mécanique de la lèvre extérieure dudit joint.

Si le propulseur comprend une seule hélice, un orifice latéral 5₂ est bouché. Dans ce cas, le collier correspondant 9₂ à un fond complètement fermé ne comprenant pas d'ouverture centrale 11₂ et constitue donc un bouchon. Si le propulseur comprend une deuxième hélice, un arbre porteur de ladite deuxième hélice débouche dans l'orifice latéral 5₂ opposé et les deux colliers latéraux 9₁ et 9₂ comprennent des ouvertures circulaires 11₁ et 11₂ comme représenté sur la figure 4.

Lorsque le manchon supérieur 7₃ n'est pas dans une zone immergée dans l'application concernée, le manchon supérieur 7₃ peut être encore réduit en diamètre s'il ne comporte pas de roulement et de joints et que ceux-ci sont logés à l'intérieur du collier 9₃ et au-dessus dudit manchon 7₃. Ledit collier supérieur 9₃ constitue une bague de protection vis à vis d'un joint d'étanchéité de préférence â double lèvres en forme de rondelle (non représentée) et un roulement (non représenté) qui sont superposés autour dudit premier arbre à l'intérieur dudit collier supérieur 9₃ au-dessus dudit manchon supérieur 7₃. Dans ce cas, l'évidement 8₄ montré sur la figure 4 permet d'éviter le contact des billes du roulement à billes sur le manchon.

A l'intérieur de la zone correspondant à la surface d'appui 4 sont prévus dans une zone de fixation :
a/ des orifices d'assemblage 6₁ des deux coquilles entre elles. Ces orifices d'assemblage 6₁ permettent la fixation des deux coquilles au moyen d'organes filetés tels que des vis et écrous notamment en acier inoxydable.
b/ des zones creuses de fixation 6₂ du carter sur un élément support assurant l'interface de liaison du carter avec le moteur et coopérant avec le manchon supérieur 7₃ et ladite surface d'appui externe 10 du carter . Avant de refermer le carter , on dispose dans ladite zone creuse de fixation du carter 6₂ un écrou qui reste bloqué après fermeture du carter et peut coopérer avec une vis introduite à travers le dit élément support d'interface de liaison avec le moteur.

Ladite zone de fixation de la surface d'appui 4 est constituée en trois parties :
. deux parties latérales 4a et 4b symétriques qui entourent la zone creuse 3₁ réceptacle dudit premier arbre, situées entre le demi-manchon supérieur 7₃ et les demi-manchons latéraux 7₁ et 7₂, et
. une partie inférieure 4c qui relie les bords inférieurs des deux demi-coquilles située dessous ladite zone creuse 3₂ réceptacle de l'engrenage, et donc située dessous les évidements annulaires 8'₁ et 8₁ et 8'₂, 8₂ dans les deux demi-manchons latéraux 7₁ et 7₂.

Les deux demi-coquilles 2 présentent une symétrie par rapport à l'axe Y Y' de la partie en forme de section tubulaire 3₁. La rainure à joints 6₃ entoure la zone creuse réceptacle 3 du dispositif de renvoi d'angle en parcourant la surface d'appui 4 entre:
. d'une part, le bord intérieur de la surface d'appui 4 qui délimite celle ci par rapport à la dite zone creuse réceptacle 3 et
. d'autre part ladite zone de fixation de la surface d'appui 4 qui comprend les orifices d'assemblage 6₁ et de fixation 6₂

De manière à assurer une étanchéité parfaite, la rainure à joint 6₃ entoure toute la bordure de la zone creuse 3₁ dans la partie latérale symétrique 4a de la surface d'appui et seulement un peu plus de la moitié de la bordure inférieure de la zone creuse 3₂ dans la partie inférieure 4c de la surface d'appui de manière à ce qu'il y ait un chevauchement des deux joints 6₃ lorsque l'on assemble les deux demi-coquilles. La rainure à joint 6₃ est donc réalisée dans une seule des parties latérales symétriques 4a de la surface d'appui.

Le joint 6₃ est placé à proximité du bord de la zone creuse 3 et chaque section de joint débouche à au moins une de ses extrémités dans une partie creuse 3₂ ou à l'extérieur 12 de la coquille de sorte que le joint peut toujours fluer lorsqu'il est mis en compression par assemblage des deux coquilles.

L'étanchéité obtenue avec les différents joints mis en place confèrent une protection contre les effets prolongés de l'immersion sous pression et correspond à un indice de protection contre les liquides (IP) de valeur 8. Ils confèrent également une protection totale contre les poussières correspondant à un indice de protection contre les corps solides (IP) de valeur 6.

Chaque demi-coquille comprend une zone creuse 3 qui permet de supporter la totalité du dispositif de renvoi d'angle de sorte que l'installation et l'ajustement de ce dernier "à ciel ouvert" peut être contrôlé visuellement ou à l'aide d'un appareil de contrôle par métrologie, en particulier en ce qui concerne l'ajustement de la perpendicularité des arbres et leur positionnement dans l'axe des différentes parties creuses du carter réceptacle des dits arbres, ce qui facilite considérablement ces opérations.

Les roulements logés dans les évidements annulaires 8₁, 8₂ et 8₃ facilitent l'ajustement des deux demi-coquilles l'une sur l'autre. Les roulements servent en effet de centreurs au montage avant que lesdits colliers soient ajustés en force par-dessus lesdits manchons.

A titre illustratif, on indique que la tolérance d'ajustement des différentes pièces d'un dispositif de renvoi est de l'ordre de 5/100 de millimètres pour une coquille dont les dimensions extérieures globales sont de l'ordre de cent mm et les diamètres inférieurs des zones creuses compris entre 10 et 30 mm.

La coquille selon l'invention est obtenue par moulage par injection à partir d'un matériau composite thermoplastique de haute performance mécanique, à savoir du polyphalamide (PPA) renforcé par des fibres de verre à proportion de 45 % en poids. Il s'agit plus particulièrement d'un polyphalamide de marque AMODEL ® (fabriqué par RHONE POULENC, réf AS - 1145) qui présente des propriétés mécaniques élevées à la fois en terme de rigidité avec un module d'élasticité supérieur à 15 GPa et une résistance à la traction élevée avec une contrainte de rupture à la traction supérieure à 250 Mpa, alors que ces deux caractéristiques de rigidité et de résistance à la traction sont en général incompatibles : un matériau de haute rigidité étant en général fragile et réciproquement.

## Revendications

1. Carter (1) de dispositif de renvoi d'angle de moteur de propulsion pour bateau destiné à être immergé et contenir un dispositif de renvoi d'angle comprenant :
- deux arbres tournants par rapport à deux axes perpendiculaires (X X', Y Y') dont un premier arbre (YY') est entraîné en rotation par le dit moteur et un deuxième arbre (XX') entraîne au moins une hélice en rotation,
- ainsi que les éléments mécaniques comprenant des engrenages et roulements à billes permettant la transmission de rotation du dit premier arbre au dit deuxième arbre ,
**caractérisé en ce qu'**il comprend deux demi-coquilles complémentaires (2) assemblées réalisées en matériau synthétique polymère thermoplastique renforcé coopérant entre elles selon un plan de jonction défini par les dit axes (X X' et Y Y ') de rotation desdit arbres tournants et présentant chacune dans ledit plan de jonction :
- une zone creuse réceptacle (3) dudit dispositif du renvoi d'angle, et
- une surface d'appui plane (4a, 4b, 4c) extérieure à la dite zone creuse et servant d'appui sur la demi-coquille complémentaire.

2. Carter selon la revendication 1 **caractérisé en ce que** :
- les deux demi-coquilles (2) comprennent à leurs extrémités des demi-manchons de sorte qu'une fois les demi-coquilles assemblées, elles définissent undit carrer présentant :
• un manchon tubulaire supérieur (7₃) à travers lequel débouche ledit premier arbre, et
• au moins un manchon tubulaire latéral (7₁, 7₂) comprenant au moins un évidement annulaire intérieur (8₁, 8₂) destiné à recevoir undit roulement, dit manchon latéral à travers lequel débouche undit deuxième arbre,
- et des moyens d'assemblage stable et étanche des deux demi-coquilles comprennent des colliers (9₁, 9₂, 9₃) de forme tubulaire qui sont ajustés sur lesdits manchons tubulaires (7₁, 7₂, 7₃).

3. Carter selon la revendication 2, **caractérisé en ce que** :
. les manchons latéraux (7₁, 7₂) comprennent des évidements annulaires (8'₁, 8'₂) destinés à recevoir des joints d'étanchéité à double lèvres en forme de rondelles placées autour dudit deuxième arbre vers l'extérieur du carter par rapport aux évidements (8₁, 8₂) destinés aux roulements ; et
. les colliers latéraux (9₁, 9₂) de forme tubulaire comprennent à leur extrémité un fond avec une ouverture centrale circulaire (11₁, 11₂), dont le diamètre correspond sensiblement au diamètre dudit deuxième arbre tournant, de sorte que lesdits joints insérés dans les évidements annulaires (8'₁, 8'₂) sont protégés par la zone pleine dudit fond, lesdits colliers latéraux (9₁, 9₂) constituant ainsi des capsules de protection vis à vis desdits joints.

4. Carter de dispositif de renvoi d'angle selon l'une des revendications 1 à 3, **caractérisé en ce qu'**il est constitué de deux demi-coquilles identiques

5. Carter selon l'une des revendications précédentes **caractérisé en ce que** la dite surface d'appui (4a, 4b, 4c) de chaque demi-coquille (2) comporte des ouvertures de fixation (6₁) qui permettent l'assemblage mécanique des deux demi-coquilles par des organes filetés tels que des vis, dans une zone de fixation située en dehors des zones d'extrémité de ladite surface d'appui formant lesdits manchons supérieur (7₃) et latéral (7₁, 7₂).

6. Carter selon l'une des revendications précédentes **caractérisé en ce que** les dites demi-coquilles (2) comprennent dans la dite zone de fixation de ladite surface d'appui (4a, 4b) située dessous ledit manchon supérieur (7₃) de part et d'autre de la zone creuse (3₁) recevant ledit premier arbre, des empreintes en creux (6₂) permettant l'insertion d'écrous de fixation du dit carter sur ledit élément support assurant un interface de liaison du carter avec le moteur.

7. Carter de dispositif de renvoi d'angle selon l'une quelconque des revendications précédentes **caractérisé en ce que** chaque demi-coquille comporte une rainure à joints (6₃) située dans la dite surface d'appui entre ladite zone creuse réceptacle (3) et unedite zone de fixation comprenant les moyens de fixation (6₁) des demi-coquilles entre elles, la dite rainure à joint couvrant plus de la moitié de la périphérie de la dite zone creuse (3) de sorte que les dits joints des deux demi-coquilles se chevauchent en un point d'intersection quand les deux coquilles sont fixées l'une à l'autre

8. Carter de dispositif de renvoi d'angle selon la revendication 7 **caractérisé en ce que** chaque demi-coquille (2) présente un axe de symétrie qui correspond à l'axe de l'un des dits arbres tournants (YY') lorsque ceux ci sont logés à l'intérieur de la zone creuse (3), et la dite rainure (6₃) à joints suit la périphérie de ladite zone creuse (3₁, 3₂) dans une des moitiés symétriques de la dite coquille en dépassant l'axe de symétrie(YY') de manière à déboucher à au moins une extrémité sur une partie creuse (3₂)ou l'extérieur (12) de la dite coquille.

9. Carter selon l'une des revendications 2 à 8, **caractérisé en ce qu'**il comprend deux manchons tubulaires latéraux 7₁, 7₂, undit deuxième arbre débouchant à travers l'un au moins des deuxdits manchons latéraux 7₁, 7₂.

10. Carter selon l'une des revendications 1 à 9 **caractérisé en ce que** la dite demi-coquille est réalisée en un matériau polymère thermoplastique qui comprend une résistance à la traction supérieure à 200 MPa, de préférence supérieure à 250 MPa, et une haute rigidité avec un module d'élasticité supérieur à 10 GPa, de préférence supérieur à 15 GPa, et sa teneur d'absorption d'eau est inférieur à 0,5 %, de préférence inférieur à 0,15 %.

11. Carter selon l'une des revendications précédentes **caractérisé en ce que** la dite demi-coquille est réalisée dans un matériau polymère composite renforcé par des charges minérales ou synthétiques, de préférence sous forme de fibres.

12. Carter selon les revendications précédentes **caractérisé en ce que** la dite demi-coquille est réalisée en polymère polyphtalamide comprenant environ 45 % de fibres de verre.

## Claims

1. A boat propulsion motor angle gearbox device housing (1) designed to be immersed and contain an angle gearbox device comprising:
- two rotating shafts with respect to two perpendicular axes (X, X', Y, Y') of which a first shaft (YY') is driven in rotation by said motor and a second shaft (XX') is driving at least one propeller in rotation;
- as well as mechanical components including gears and ball bearings for transmitting the rotation of said first shaft to said second shaft,
**characterised in that** it includes two complementary half-shells (2) assembled and made of a reinforced thermo-plastic polymer synthetic material and co-operating with one another according to a junction plane defined by said axes of rotation (XX', YY') of said rotating shafts and each presenting in said junction plane:
- a hollow receptacle area (3) of said angle gearbox device, and
- a plane bearing surface (4a, 4b, 4c) outside said hollow zone and serving as a support on the complementary half-shell.

2. A housing according to claim 1, **characterised in that**:
- the two half-shells (2) include at their ends half-sleeves so that once the half-shells are assembled together, they define one said housing presenting:
• an upper tubular sleeve (7₃) through which said first shaft opens out, and
• at least one side tubular sleeve (7₁, 7₂) comprising at least one internal annular recess (8₁, 8₂) designed to accommodate one said bearing, said side sleeve through which one said second shaft opens out,
- and stable and sealed means of assembling the two half-shells include collars (9₁, 9₂, 9₃) tubular in shape, fitted to said tubular sleeves (7₁, 7₂, 7₃).

3. A housing according to claim 2, **characterised in that**:
- the side sleeves (7₁, 7₂) comprise annular hollows (8'₁, 8₂) designed to receive double lip seals in the form of washers placed around said second shaft toward the outside of the housing with respect to the hollows (8₁, 8₂) intended for the bearings; and
- the side collars (9₁, 9₂), tubular in shape, comprise at one end a bottom with a central circular opening (11₁, 11₂) the diameter of which corresponds approximately to the diameter of said second rotating shaft so that said seals inserted in the annular hollows (8'₁, 8'₂), are protected by the solid area of said bottom, said side collars (9₁, 9₂) forming protection caps with respect to said seals.

4. An angle gearbox device housing according to one of claims 1 to 3, **characterised in that** it comprises two identical half-shells.

5. A housing according to one of the previous claims, **characterised in that** said bearing surface (4a, 4b, 4c) of each half-shell (2) includes attaching openings (6₁) permitting the mechanical assembly of the two half-shells by threaded devices such as screws, in an attaching area located away from the end zones of said bearing surface forming said upper sleeves (7₃) and side sleeves (7₁, 7₂).

6. A housing according to one of the previous claims, **characterised in that** said half-shells (2) comprise in said attaching zone of said bearing surface (4a, 4b) located below said upper sleeve (7₃) on either side of the hollow area (3₁) receiving said first shaft, hollow cavities (6₂) permitting the insertion of nuts for attaching said housing to said support part providing an interconnecting interface between the housing and the motor.

7. An angle gearbox device housing according to any one of the previous claims, **characterised in that** each half-shell includes a seal groove (6₃) located in said bearing surface between said receptacle hollow zone (3) and one said attaching zone comprising the attaching means (6₁) for attaching the half-shells together, said seal groove covering over half of the perimeter of said hollow area (3) so that said seals of the two half-shells overlap at a point of intersection when the two shells are attached to one another.

8. An angle gearbox device housing according to claim 7, **characterised in that** each half-shell (2) has an axis of symmetry corresponding to the axis of one of said rotating shafts (YY') when the latter are housed inside the hollow zone (3), and said seal groove (6₃) follows the perimeter of said hollow zone (3₁, 3₂) in one of the symmetrical halves of said shell while protruding from the axis of symmetry (YY') in such a way as to open out at least at one end into a hollow part (3₂) or on the outside (12) of said shell.

9. A housing according to one of claims 2 to 8, **characterised in that** it includes two side tubular sleeves 7₁, 7₂, one said second shaft opening out through at least one of said two side sleeves 7₁, 7₂.

10. A housing according to one of claims 1 to 9, **characterised in that** said half-shell is made of a thermoplastic polymer material which offers tensile strength in excess of 200 MPa, preferably in excess of 250 MPa, and high rigidity with an elasticity modulus in excess of 10 GPa, preferably in excess of 15 Gpa, and having a water absorption capacity of less than 0.5%, and preferably less than 0.15%.

11. A housing according to one of the previous claims, **characterised in that** said half-shell is made of a composite polymer material reinforced by mineral or synthetic fillers, preferably in the form of fibers.

12. A housing according to the previous claims, **characterised in that** said half-shell is made of a polyphthalamide polymer comprising approximately 45% glass fiber.

## Patentansprüche

1. Gehäuse (1) eines Winkelgetriebes für den Antriebsmotor eines Schiffs, das dazu bestimmt ist, untergetaucht zu werden und ein Winkelgetriebe zu enthalten, das umfasst:
- zwei Wellen, die sich in Bezug auf zwei zueinander senkrechte Achsen (XX', YY') drehen, von denen eine erste Welle (YY') von dem Motor in Drehung versetzt wird und eine zweite Welle (XX') wenigstens eine Schraube in Drehung versetzt,
- sowie mechanische Elemente mit Zahnrädern und Kugellagern, die eine Übertragung der Drehbewegung der ersten Welle auf die zweite Welle ermöglichen,
**dadurch gekennzeichnet, dass** es zwei zusammengefügte, komplementäre Halbschalen (2) aus einem synthetischen, verstärkten, thermoplastischen Polymerwerkstoff umfasst, die entlang einer von den Drehachsen (X X' und Y Y') der drehbaren Wellen definierten Verbindungsebene miteinander zusammenwirken und jeweils in dieser Verbindungsebene aufweisen:
- einen hohlen Aufnahmebereich (3) für das Winkelgetriebe sowie
- eine ebene Auflagefläche (4a, 4b, 4c) die sich außerhalb dieses hohlen Bereichs befindet und zur Abstützung an der komplementären Halbschale dient.

2. Gehäuse nach Anspruch 1,
**dadurch gekennzeichnet, dass**:
- die beiden Halbschalen (2) an ihren Enden Muffenhälften in der Art aufweisen, dass die Halbschalen nach ihrem Zusammenfügen ein Gehäuse bilden, mit:
• einer oberen röhrenförmigen Muffe (7₃), durch die die erste Welle mündet, und
• wenigstens einer seitlichen röhrenförmigen Muffe (7₁, 7₂) mit wenigstens einer ringförmigen inneren Aussparung (8₁, 8₂), die zum Aufnehmen eines der Lager bestimmt ist, wobei die zweite Welle durch die seitliche Muffe mündet,
- und Mittel zur Herstellung einer stabilen, dichten Verbindung der beiden Halbschalen röhrenförmige Ringe (9₁, 9₂, 9₃) umfassen, die auf die röhrenförmigen Muffen (7₁, 7₂, 7₃) aufgesetzt sind.

3. Gehäuse nach Anspruch 2,
**dadurch gekennzeichnet, dass**:
. die seitlichen Muffen (7₁, 7₂) ringförmige Aussparungen (8'₁, 8'₂) aufweisen, die dazu bestimmt sind, Doppellippendichtungen in Form von Scheiben aufzunehmen, die um die zweite Welle angeordnet sind und in Bezug auf die für die Lager bestimmten Aussparungen (8₁, 8₂) zur Außenseite des Gehäuses zeigen; und
. die röhrenförmigen seitlichen Ringe (9₁, 9₂) an ihrem Ende einen Boden mit einer kreisförmigen mittigen Öffnung (11₁, 11₂) aufweisen, deren Durchmesser im Wesentlichen dem Durchmesser der zweiten drehbaren Welle entspricht, so dass die in die ringförmigen Aussparungen (8'₁, 8'₂) eingefügten Dichtungen durch den massiven Bereich des Bodens geschützt sind, wobei die seitlichen Ringe (9₁, 9₂) somit Schutzkapseln in Bezug auf diese Dichtungen bilden.

4. Gehäuse eines Winkelgetriebes nach einem der Ansprüche 1 bis 3,
**dadurch gekennzeichnet, dass** es aus zwei identischen Halbschalen besteht.

5. Gehäuse nach einem der vorhergehenden Ansprüche,
**dadurch gekennzeichnet, dass** die Auflagefläche (4a, 4b, 4c) jeder Halbschale (2) Befestigungsöffnungen (6₁), die die mechanische Verbindung der beiden Halbschalen mit Hilfe von Teilen mit Gewinden wie z.B. Schrauben ermöglichen, in einem Befestigungsbereich umfasst, der außerhalb der Endbereiche der Auflagefläche angeordnet ist, die die obere (7₃) und seitliche (7₁, 7₂) Muffe bilden.

6. Gehäuse nach einem der vorhergehenden Ansprüche,
**dadurch gekennzeichnet, dass** die Halbschalen (2) in dem Befestigungsbereich der Auflagefläche (4a, 4b), der unter der oberen Muffe (7₃) auf beiden Seiten des die erste Welle aufnehmenden hohlen Bereichs (3₁) angeordnet ist, Hohlräume (6₂) aufweisen, die das Einführen von Muttern zur Befestigung des Gehäuses auf dem Tragelement ermöglichen, das eine Verbindungsstelle zwischen dem Gehäuse und dem Motor bildet.

7. Gehäuse eines Winkelgetriebes nach einem der vorhergehenden Ansprüche,
**dadurch gekennzeichnet, dass** jede Halbschale eine Dichtungsnut (6₃) in der Auflagefläche zwischen dem hohlen Aufnahmebereich (3) und einem Befestigungsbereich mit Mitteln (6₁) zur gegenseitigen Befestigung der Halbschalen aufweist, wobei die Dichtungsnut mehr als die Hälfte des Umfangs des hohlen Bereichs (3) abdeckt, so dass die Dichtungen der beiden Halbschalen sich in einem Schnittpunkt überschneiden, wenn die beiden Halbschalen miteinander verbunden sind.

8. Gehäuse eines Winkelgetriebes nach Anspruch 7,
**dadurch gekennzeichnet, dass** jede Halbschale (2) eine Symmetrieachse aufweist, die der Achse einer der drehbaren Wellen (YY') entspricht, wenn diese in dem hohlen Bereich (3) gelagert ist, und die Dichtungsnut (6₃) dem Umfang des hohlen Bereichs (3₁, 3₂) in einer der symmetrischen Hälften der Schale folgt und hierbei über die Symmetrieachse (YY') so hinausreicht, dass sie wenigstens an einem Ende in einen hohlen Teil (3₂) bzw. den Außenbereich (12) der Schale mündet.

9. Gehäuse nach einem der Ansprüche 2 bis 8,
**dadurch gekennzeichnet, dass** es zwei seitliche, röhrenförmige Muffen (7₁, 7₂) umfasst, wobei eine als zweite bezeichnete Welle wenigstens durch eine der beiden seitlichen Muffen (7₁, 7₂) mündet.

10. Gehäuse nach einem der Ansprüche 1 bis 9,
**dadurch gekennzeichnet, dass** die Halbschale aus einem thermoplastischen Polymerwerkstoff gefertigt ist, der eine Zugfestigkeit von mehr als 200 MPa, vorzugsweise mehr als 250 MPa, eine hohe Steifigkeit mit einem Elastizitätsmodul von mehr als 10 GPa, vorzugsweise mehr als 15 GPa, sowie einen Wasseraufnahmevermögen von weniger als 0,5 %, vorzugsweise weniger als 0,15 % aufweist.

11. Gehäuse nach einem der vorhergehenden Ansprüche,
**dadurch gekennzeichnet, dass** die Halbschale aus einem Polymerverbundstoff gefertigt ist, der mit mineralischen oder synthetischen Füllstoffen, vorzugsweise in Form von Fasern, verstärkt ist.

12. Gehäuse nach einem der vorhergehenden Ansprüche,
**dadurch gekennzeichnet, dass** die Halbschale aus einem Polyphthalamidpolymer mit einem Glasfaseranteil von ca. 45 % gefertigt ist.
